# EUROPÄISCHE PATENTSCHRIFT

(11) **EP 2 290 882 B1**
(45) Veröffentlichungstag und Bekanntmachung des Hinweises auf die Patenterteilung: **29.02.2012**
(21) Anmeldenummer: 10008887.1
(22) Anmeldetag: 26.08.2010
(51) Int. Cl.: H04L 12/437, H04L 12/46, H04L 12/40

(54) **Verfahren zur mehrfachen Fehlerredundanz in Netzwerken mit Ringtopologien**
Method for multiple error redundancy in networks with ring topologies
Procédé de redondance d'erreurs multiple dans des réseaux à topologies annulaires

(30) Priorität: 28.08.2009 DE 102009039287
(43) Veröffentlichungstag der Anmeldung: 02.03.2011
(73) Patentinhaber: Hirschmann Automation and Control GmbH, 72654 Neckartenzlingen (DE)
(72) Erfinder: Kleineberg, Oliver, 73240 Wendlingen (DE); Rentschler, Markus, 72581 Dettingen (DE); Hagen, Sebastian, 42658 Bempflingen (DE)
(74) Vertreter: Greif, Thomas

(56) Entgegenhaltungen:
- EP-A1- 1 729 453
- WO-A1-99/46908
- SIVENCRONA H ET AL: "RedCAN: simulations of two fault recovery algorithms for CAN" DEPENDABLE COMPUTING, 2004. PROCEEDINGS. 10TH IEEE PACIFIC RIM INTERNA TIONAL SYMPOSIUM ON MARCH 3-5, 2004, PISCATAWAY, NJ, USA,IEEE LNKD- DOI:10.1109/PRDC.2004.1276580, 3. März 2004 (2004-03-03), Seiten 302-311, XP010690460 ISBN: 978-0-7695-2076-6
- HUBERT KIRRMANN ET AL: "IEC 62439 PRP: Bumpless recovery for highly available, hard real-time industrial networks" INTERNET CITATION 31. Dezember 2007 (2007-12-31), XP002572673 [gefunden am 2007-09-25]
- Hubert Kirrmann: "Standard Redundancy Methods for Highly Available Automation Networks - rationales behind the upcoming IEC 62439 standard" ETFA 2006 21. September 2006 (2006-09-21), Seiten 1-43, XP002608591 Gefunden im Internet: URL:www.action-m.com/etfa2006/keynote/down load_3.php [gefunden am 2010-11-07]

## Beschreibung

Die Erfindung betrifft ein Verfahren zum Betreiben eines Netzwerkes mit einer linienförmigen Ringtopologie und Redundanzelgenschaften, wobei innerhalb des Netzwerkes mehrere Netzwerkinfrastrukturgeräte betrieben werden und zumindest eines der Netzwerkinfrastrukturgeräte als Redundanzmanager betrieben wird oder in einem Fehlerfalle betreibbar ist, wobei der Redundanzmanager insbesondere dazu ausgebildet ist, im fehlerfreien Fall die an ihm angeschlossenen Linienenden voneinander zu trennen und im Fehlerfall die beiden Linienenden miteinander zu verbinden, wobei der Redundanzmanager weiterhin in vorgegebenen Zeitintervallen Testtelegramme in die beiden Linienenden einspeist und aus dem Empfang an dem jeweils anderen Linienende Innerhalb eines vorgegebenen Zeitintervalles einen Befehl für eine Trennung beziehungsweise Verbindung von Linienenden ableitet, gemäß den Merkmalen des Oberbegriffes des Patentanspruches 1.

Bekannt und Stand der Technik sind Ringnetzwerke (Netzwerke mit einer Ringtopologie mit Netzwerkinfrastrukturgeräten wie Switches, Routers, Hubs und dergleichen) und zugehörige Protokolle, die eine Ausfallsicherung der ringförmigen Netzwerkatruktur ermöglichen. In [1] (WO99/046908: Lokales Netzwerk, insbesondere Ethernet-Netzwerk, mit Redundanzeigenschaften und Redundanzmanager) wird eine solche Ausprägung eines Netzwerkes beschrieben.

In [2] (Draft IEC 62439-2 INDUSTRIAL COMMUNICATION NETWORKS HIGH AVAILABILITY AUTOMATION NETWORKS; Part 2: Media Redundancy Protocol (MRP)) wird ein solcher Mechanismus als internationaler Standard spezifiziert.

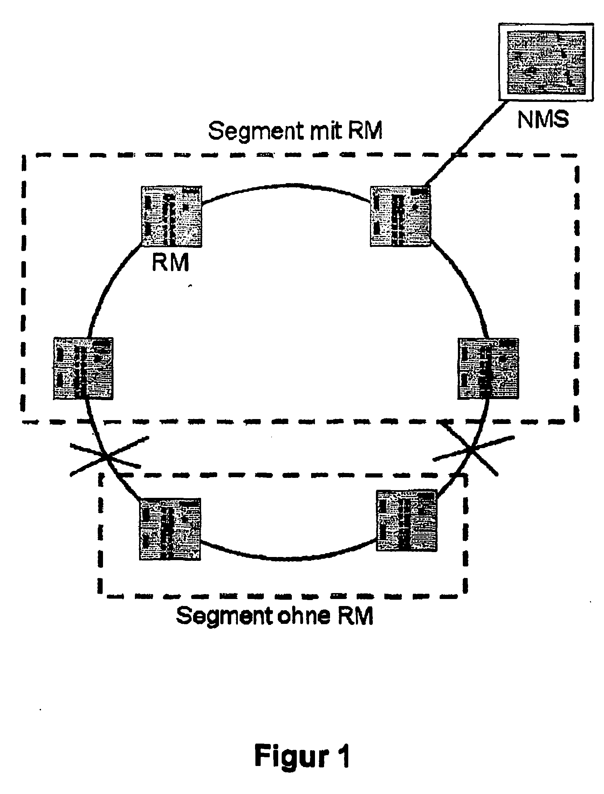

Ein Nachteil der physikalischen Ringtopologie ist die Anfälligkeit gegen mehr als einen physikalischen Fehler In der Topologie. Tritt ein Defekt auf, so wandelt sich die physikalische Ringtopologie zu einer physikalischen Linientopologie. Tritt ein weiterer Fehler auf, so wird das Netzwerk segmentiert (siehe hierzu auch die beispielhafte Figur 1, die die Erfindung repräsentiert Die physikalische Ringstruktur wurde durch zwei Defekte unterbrochen. Zwei der Netzwerkgeräte sind jetzt von einer angeschlossenen Netzwerkmanagementstation (NMS) aus nicht mehr erreichbar).

Aus SIVENCRONA H ET AL: "RedCAN: simulations of two fault recovery algorithms for CAN" DEPENDABLE COMPUTING, 2004. PROCEEDINGS. 10TH IEEE PACIFIC RIM INTERNA TIONAL SYMPOSIUM ON MARCH 3-5, 2004, PISCATAWAY, NJ, USA, IEEE LNKD-DOI:10.1109/PRDC.2004.1276580, 3. März 2004 (2004-03-03). Seiten 302-311, XP010690460 ISBN: 978-0-7695-2076-6 ist ein RedCAN-Konzept bekannt, mit dem die Fehlertoleranz gegen Knoten- und Verbindungsfehler in einem CAN-BusSystem durch konflgurierbare Switche verbessert werden soll. Dabei sollen fehlerhafte Knoten oder fehlerhaft arbeitende Bus-Segmente durch konfigurierbere Switche dadurch aus der Netzwerk-Topologie entfernt werden, in dem sie keinen Zugang mehr zu dem Bussystem erhalten.

Aus der EP 1 729 453 A1 ist ein Verfahren zur Schutzumschaltung in einem Datennetz mit mindestens zwei Ringen mit einem gemeinsam benutzten Abschnitt und mehreren Knoten bekannt, wobei jeder Ring einen zugeordneten Ringmanager zum Prüfen seines zugeordneten Ringes aufweist und die Ringmanager fest zugeordnete verschiedene Prioritäten aufweisen, wobei jeder Knoten eines gemeinsam benutzten Abschnittes den gemeinsam benutzten Abschnitt überwacht und im Fall eines Abschnittaustalles eine Ausfallnachricht zu einem Ringmanager höherer Priorität eines zugeordneten Ringes sendet und der Ringmanager höherer Priorität seinen Port endblockiert, während der Ringmanager niedrigerer Priorität seinen Port blockiert hält.

Es ergeben sich folglich insbesondere zwei Probleme:
1. Die Geräte müssen Beginn und Ende einer Segmentierung selbsttätig erkennen.
2. Das Verfahren, nachdem ein Umschalten auf redundante Strecken deterministisch erfolgt und Schleifen in der Netzstruktur vermieden werden, muss beschrieben werden. Schleifen In der Netzwerkstruktur, die nicht ausgelöst werden, führten insbesondere bei Ethernet-Netzwerken zu endlos kreisenden Datenframes und zur Funktionsunfähigkeit des Netzwerks.

Der Erfindung liegt daher die Aufgabe zugrunde, eine Lösung für die eingangs beschriebenen Probleme bereitzustellen und insgesamt ein Verfahren zum Betreiben eines Netzwerkes mit einer Ringtopologie dahingehend zu verbessern, dass der Ausfall von Netzwerkinfrastrukturgeräten innerhalb der Ringtopologie in Folge einer Unterbrechung dieser Ringtopologie in kürzester Zeit wieder hergestellt werden kann.

Diese Aufgabe ist durch die Merkmale des Patentanspruches 1 gelöst.

Erfindungsgemäß ist vorgesehen, dass erfasst wird, ob ein Segment des Netzwerkes von dem übrigen Netzwerk abgetrennt ist, und dann, wenn dieser Fall erfasst worden ist, zwischen einem Netzwerkinfrestrukturgerät des abgetrennten Segmentes und einem Netzwerkinfrestrukturgerät insbesondere dem Redundanzmanager, des übrigen Netzwerkes über genau eine zusätzliche oder zumindest eine zusätzliche Verbindung das Ringnetzwerk wieder geschlossen wird.

Diese Vorgehensweise hat den Vorteil, dass damit sichergestellt werden kann, dass für den Fall, dass innerhalb der linienförmigen Ringtopologie nicht nur eine Unterbrechung vorliegt, sondern auch mehrere Unterbrechungen vorliegen, die zu einer Segmentierung geführt haben, dieser Fehlerfall festgestellt wird, und das abgetrennte Segment des Netzwerkes über eine weitere, das heißt zusätzliche und von der Ringtopologie des Netzwerkes unabhängige Verbindung wieder mit dem zugehörigen Netzwerk mit Ringtopologie (Ringnetzwerk) verbunden wird. Das bedeutet, dass das abgetrennte Segment des Ringnetzwerkes über eine zusätzliche Verbindung mit dem zugehörigen Ringnetzwerk verbunden wird, so dass zusätzlich Maßnahmen hinsichtlich der Verbindungen (wie zum Beispiel doppelte Busleitungen) vermieden werden.

Die Idee beschreibt somit, wie ein bekannter Mechanismus zur Konfiguration und zum Betreiben von Redundanzen in einer ringförmigen Netzwerkstruktur, beispielsweise einer Ethernet-Ringstruktur, um zusätzliche Ausfallsicherheit und Diagnosemöglichkeiten ergänzt werden kann.

Weitere Ausgestaltungen der Erfindung mit den sich daraus ergebenden Vorteilen sind In den Unteransprüchen angegeben und im Folgenden beschrieben.

Die erfindungsgemäße Lösung beschreibt eine physikalische Ringstruktur, In der zusätzliche Medienverbindungen als Rückfalllösungen eingesetzt und aktiviert werden, wenn eine Segmentierung eines Teil des Netzwerkes (Ringes) detektiert wird. Die Lösung zeichnet sich dadurch aus, dass zusätzlich zu den Anschlüssen für ein Netzwerk, das über eine Medienredundanz nach [2] verfügt, mindestens ein zusätzlicher Netzwerkanschluss (Verbindung) konfiguriert wird, der als Rückfalllösung im Falle der vollständigen Abtrennung eines Netzwerksegmentes genutzt wird. Die Netzwerkinfrastruktur, über die das Gerät Ober den zusätzlichen Netwerkport (Schnittstellen) kommuniziert, kann dabei beliebig ausgeprägt sein. Im Nachfolgenden wird zur genaueren Beschreibung des Mechanismus für diese Infrastruktur ebenfalls ein Ringnetzwerk angenommen.

In einer physikalischen Ringstruktur, in der ein Redundanzmechanismus nach beispleisweise [1] oder [2] eingesetzt wird, wird zwischen zwei teilnehmenden Klassen der Netzwerkinfrastrukturgeräte unterschieden: Redundanzmanager (RM) und Redundanzclients (RC). Insbesondere wird beschrieben, wie der RM einen seiner Ringanschlüsse blockiert, um ein Kreisen von Datenframes zu vermeiden und wie er den Zustand des Netzwerks anhand an das Netzwerk versendeter Testframes überprüft. Diese Frames werden an einem Ringanschluss (ein erstes Linienende) versendet, über den Ring übertragen und am jeweils anderen Ringanschluss (weiteres Linienende) aufgefangen. Bleiben diese Frames aus, so liegt eine Beschädigung des Ringe und/oder eine Beeinträchtigung des Netzwerkverkehrs vor und der Redundanzmanager öffnet seinen bislang blockierten Ringanschluss für den normalen Datenverkehr, um die Erreichbarkeit für alle Geräte auf dem Ring sicherzustellen. Testframes werden auch Ober für den normalen Netzwerkverkehr blockierte Ports empfangen und versendet, im Gegensatz zu normalem Datenverkehr. Somit ergeben sich im Falle einer Segmentierung eines Netzwerks, d.h. wenn zwei oder mehr Fehler Teile des Ringes abtrennen, zwei mögliche Fälle für ein einzelnes Netzsegment:
1. Das Netzsegment beinhaltet den RM nicht.
2. Das Netzsegment beinhaltet den RM.

Eine Segmentierung des Netzwerkes kann somit festgestellt werden im Fall 1 durch das Ausbleiben von Testframes auf beiden Ringschnittstellen der Infrastrukturgeräte dieses Netzsegments.

Im Fall 2 bleiben die Testframes auf den Infrastrukturgeräten nur an einem Ringanschluss aus. Somit kann nicht zweifelsfrei festgestellt werden, ob nur ein einzelner Defekt vorliegt, der durch den Redundanzmanager abgefangen wird oder ob eine wirkliche Segmentierung eines Teils des Ringe vorliegt. Ein Netzteilnehmer kann in diesem Fall einen einzelnen Defekt des physikalischen Rings nicht von einer Segmentierung unterschieden. Somit muss dem Segment mit dem Redundanzmanager signalisiert werden, dass eine Segmentierung vorliegt.

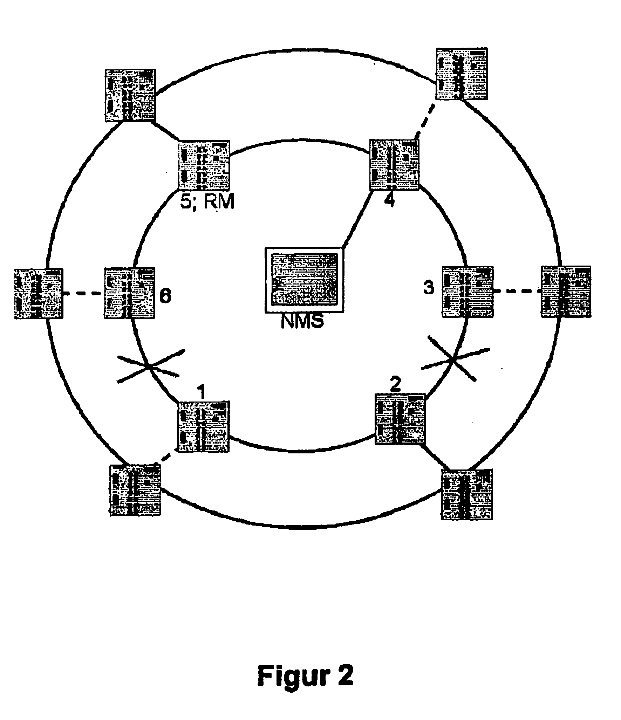

Der Aufbau einer zweiten Redundanzstrecke kann beispielsweise wie In Figur 2 gezeigt erfolgen. Die zweite Redundanzstrerke (der 2. Ring In Figur 2) kann hierbei beliebig ausgeprägt sein, beispielsweise als 2. Kabelring, als Funknetzwetk oder beliebige andere Netzwerkstruktur. Figur 2 dient im Folgenden als Fallbeispiel zur Erläuterung der Arbeitsweise des Redundenzmechanismus.

Die Verbindungen zwischen dem äußeren "Redundanzring" (weiteres Netzwerk) und dem Inneren "Produktivring" (erstes bzw. eigentliches Netzwerk mit Ringtopologie) sind hierbei in der fehlerfreien Konfiguration sowie im fehlerfreien Betrieb des "Produktivrings" für den normalen Netzwerkverkehr blockiert. Die einzige Verbindung zwischen den beiden Netzwerken ist der Übergang am Redundanzmanager: Dieser wird für den normalen Netzwerkverkehr offen gehalten und ein einzelner offener Übergang zwischen den beiden Netzwerken führt noch nicht zu kreisenden Datenframes. Im Falle einer Redundanzumschaltung muss lediglich der Inhalt einer Speichereinheit eines jeden Netzwerkinfrastrukturgerätes, insbesondere die sogenannte Filtering Database (FDB) aller beteiligten Switche, gelöscht werden, um unmittelbar die Vermittlung von Frames über das Redundanzsegment zu ermöglichen. Dies geschieht durch den Versand eines Informationsframes durch ein Teilnehmergerät (Netzwerkinfrastrukturgerät) in einem segmentierten Teilbereich des Ringes auf seiner Schnittstelle in das weitere (äußere) Netzwerk, insbesondere In den äußeren Redundanzring, zusammen mit der Öffnung dieser Schnittstelle für den regulären Netzwerkverkehr. Im Folgenden wird das Verhalten von teilnehmenden Geräten für die zwei möglichen Fälle (Segment mit RM und Segment ohne RM) und ohne den Ausfall des Redundanzmanagers beschrieben, Der Sonderfall eines Fehlers im Redundanzmanager wird im Anschluss daran erläutert:
1. Verhalten der Geräte In Netzsegmenten mit Redundanzmanager Empfängt ein Redundanzmanager Ober die Verbindung zwischen dem Produktivring und dem äußeren Redundanzring ein Informationsframe eines Gerätes, das auf die Segmentierung eines Teils des Netzwerks hinweist, und empfängt er auf seinen beiden Schnittstellen zum Produktivring seine Testframes nicht mehr, so löscht er den Inhalt der zugehörigen Speichereinheit, Insbesondere seine FOB. Damit wird die unmittelbare Kommunikation über die Verbindung in das zweite Redundanznetzwerk (Redundanzring) ermöglicht. Gleichzeitig versendet er die Anweisung zur Löschung insbesondere der FDBs an alle Netzwerkgeräte auf seinem Netzwerksegment.
2. Verhalten der Geräte in Netzsegmenten ohne Redundanzmanager: Stellt ein Gerät fest, dass es auf beiden Schnittstellen zum Produktivring keine Testframes mehr empfängt, dann sendet es auf seinen Ringschnittstellen eine Bekanntmachung zur Öffnung der Redundanzschnittstelle aus. Empfängt es innerhalb einer definierten Zeitspanne keine Bekanntmachung eines anderen Gerätes mit einer bessern Priorisierung (beispielsweise anhand der MAC Adresse), so öffnet es seinen Netzwerkport zum redundanten Ring und versendet ein Informationsframe mit dem Inhalt in den redundanten Ring, dass eine Segmentierung vorliegt. Dieses Frame wird vom Redundanzmanager über seine Schnittstelle aufgefangen. Empfängt es hingegen eine Benachrichtigung über die bevorstehende Öffnung der zusätzlichen Redundanzschnittstelle von einem anderen Teilnehmer mit einer besseren Priorisierung, dann bleibt die zusätzliche Redundanzschnlttetelle blockiert, da ein anderes Gerät im gleichen Segment die Verbindung in das redundante Netz realisiert.

Das Netzwerkgerät das über das Auswahlverfahren als höshstpriorisiertes Gerät identifiziert wurde, öffnet seinen Port in das redundante Netz, löscht seine FDB und versendet gleichzeitig auf seinen Ringschnittstellen eine Nachricht zur Löschung der FDBs In sein angeschlossenes Netzsegment des defekten Ringes. In festen Abständen versendet das höchstpriorisierte Gerät weiterhin seine Öffnungsnachricht auf seinen Ringanschlüssen. Am Eintreffen oder Ausbleiben dieser Nachricht können andere Netzwerkgeräte in diesem Segment einen möglichen Ausfall dieses Gerätes erkennen und entsprechend dem oben beschriebenen Auswahlverfahren ein neues Gerät wählen, das den zusätzlichen Redundanzport öffnet.

Die hieraus resultierende Netzstruktur ist beispielhaft in Figur 2 ersichtlich. Netzwerkstrecken (Verbindungen über Datenleitung, aber auch Funkstrecken), die für den normalen Protokollverkehr blockiert sind (durch mindestens einen blockierten Port), sind gestrichelt dargestellt. Im Beispiel in Figur 2 hat das Gerät mit der Nummer 2 die beste Priorität auf dem Netzsegment ohne Redundanzmanager und hat seinen zusätzlichen Redundanzport geöffnet. In Figur 2 existieren lediglich zwei Netzwerksegmente, eines ohne RM und eines mit RM. Theoretisch können bei einer beliebigen Anzahl an Geräten im Ring bei einer genügend großen Anzahl an Fehlern beliebig viele Segmente ohne RM entstehen. Diese würden sich alle analog zu dem hier beschriebenen Verfahren verhalten.

Empfängt ein Gerät, das seinen redundanten Port für den normalen Netzwerkverkehr aktiviert hat, ein Informationsframe Ober die Öffnung eines anderen redundanten Ports über den redundanten Ring, so sendet es ebenfalls eine FDB-Löschnachricht auf seinen Ringanschlüssen.

### Sonderfall: Ausfall des Redundanzmanagers oder erneute Segmentierung

Der Ausfall des Redundanzmanagers bedeutet für ein Netzwerk, dass beispielsweise nach [1] oder [2] arbeitet lediglich das Ausbleiben der Testframes. Im Falle des Betriebe nach dem hier vorgestellten Verfahren wird sich mit dem Ausbleiben der Testframes durch den Ausfall des RM das gesamte Netzwerksegment verhalten wie ein einzelnes Segment ohne RM, wie weiter oben beschrieben. Fällt der Redundanzmanager und ein weiteres Gerät oder eine Verbindung zwischen den Geräten aus (d.h. kommt es zu einer weiteren Segmentierung), so kann anhand von zyklisch auf den Ringanschlüssen versendeten Öffnungsnachrichten bzw. deren Ausbleiben die weitere Segmentierung erkannt werden. Das gleiche gilt für eine weitere Segmentierung eines bereits segmentierten Teilnetzwerks.

Im Falle der Reparatur muss die ursprüngliche Konfiguration wieder hergestellt werden. Eine Reparatur erzeugt folgendes Verhalten:
Empfängt der RM an seinen beiden Ringanschlüssen wieder seine eigenen Testframes, so versendet er eine FDB-Löschnachricht an den Ringanschlüssen und blockiert einen seiner Ringanschlüsse, wie in [1] und [2] vorgesehen. Die Ringclients, die sich (da die Testframes durch den Redundanzmanager wieder empfangen werden) folglich wieder in einem Segment mit dem Ringmanager befinden müssen, registrieren dies durch den Empfang der Testframes und blockieren ihren zusätzlichen Redundanzport wieder.

Erfolgt die Reparatur zuerst In bzw. zwischen den Segmenten, die beide keinen RM beinhalten, dann werden die Geräte, die ihren zusätzlichen Redundanzport geöffnet haben, anhand der weiter oben beschriebenen Vorgehensweise das Geräte ermitteln, das die Verbindung offen hält, während das andere Gerät die Verbindung blockiert. So kommt es auch bei einer Reparatur von verschiedenen Segmenten ohne RM in vorteilhafter Weise nicht zu Schleifen und kreisenden Frames.

Der vorstehend beschriebene Prozess kann dadurch beschleunigt werden, dass ein Gerät, das eine Wiederherstellung der physikalischen Verbindung auf einem seiner Ringports feststellt und weiterhin keine Testframes von dem Redundanzmanager empfängt, eine Benachrichtigung an das an seine Ringports angeschlossene Ringsegment verschickt, dass das Wahlverfahren wiederholt werden muss.

Nochmals kurz zusammengefasst beschreibt die Erfindung ein Verfahren zur Gewährleistung zusätzlicher Redundanz innerhalb einer Ringtopologie, wobei an Ringteilnehmern (Netzwerkinfrastrukturgeräte) weitere Schnittstellen zu redundanten Datenpfaden definiert werden, über die bei Ausfall der Kommunikation Ober den ursprünglich für die Datenvermittlung vorgesehenen Ring zusätzliche Verbindungen zu abgetrennten Netzwerksegmenten hergestellt werden können.

Weiterhin sind die redundanten Datenpfade ebenfalls als Ringstrukturen ausgebildet.

Ebenfalls weiterhin erfolgt die Steuerung der Redundanzmechanismen über Steuersignale zwischen den zusätzlich konfigurierten Redundanzsdmittstellen.

Schließlich und besonders wichtig ist, dass die Erkennung der Segmentierung über den Empfang von Testframes, der physikalischen Erkennung von Verbindungsausfällen oder mittels dieser beiden Verfahren erfolgt.

Der Begriff "Netzwerkinfrastrukturgerät" steht stellvertretend für Begriffe wie Gerät, Netzwerkgerät, Switch, Teilnehmergerät, Ringclient und dergleichen. Ebenso werden die Begriffe Port, Ringanschluss, Ringschnittstelle, Schnittstelle, Netzwerkport synonym zueinander verwendet.
Testtelegramm = Testframe

## Patentansprüche

1. Verfahren zum Betreiben eines Netzwerkes mit einer linienförmigen Ringtopologie und Redundenzeigenschaften, wobei Innerhalb des Netzwerkes mehrere Netzwerkinfrastrukturgeräte betrieben werden und zumindest eines der Netzwerkinfrastrukturgeräte als Redundanzmanager betrieben wird oder in einem Fehlerfalle betreibbar ist, wobei der Redundanzmanager insbesondere dazu ausgebildet ist, im fehlerfreien Fall die an ihm angeschlossenen Linienenden voneinander zu trennen und im Fehlerfall die beiden Linienenden miteinander zu verbinden, wobei der Redundanzmanager weiterhin in vorgegebenen Zeitintervallen Testtelegramme in die beiden Linienenden einspeist und aus dem Empfang an dem jeweils anderen Linienende Innerhalb eines vorgegebenen Zeitintervalles einen Befehl für eine Trennung beziehungsweise Verbindung von Linienenden ableitet, **dadurch gekennzeichnet, dass** erfasst wird, ob ein Segment des Netzwerkes von dem übrigen Netzwerk abgetrennt ist, und dann, wenn dieser fall erfasst worden ist, zwischen einem Netzwerkinfrastrukturgerät des abgetrennten Segmentes und einem Netzwerkinfrastrukturgerät, insbesondere dem Redundanzmanager, des übrige Netzwerkes über zumindest eine zusätzliche Verbindung das Ringnetzwerk wieder geschlossen wird.

2. Verfahren nach Anspruch 1, **dadurch gekennzeichnet, dass** die zumindest eine zusätzliche Verbindung über ein weiteres Netzwerk mit Netzwerkintrastrukturgeräten hergestellt wird.

3. Verfahren nach Anspruch 1 oder 2, **dadurch gekennzeichnet, dass** die zumindest eine Verbindung zwischen dem weiteren Netzwerk und dem Netzwerk in der fehlerfreien Konfiguration sowie im fehlerfreien Betrieb für den normalen Netzwerkverkehr blockiert sind und die einzige Verbindung zwischen den beiden Netzwerken der Übergang am Redundanzmanager ist, wobei dieser Übergang für den normalen Netzwerkverkehr offen gehalten wird und ein einzelner offener Übergang zwischen den beiden Netzwerken noch nicht zu kreisenden Datenframes führt, wobei jedoch im Falle einer Redundanzumschaltung der Inhalt einer Speichereinheit eines jeden NetzwerkInfrestrukturgerätes, insbesondere eine Filtering Database (FDB) aller beteiligten Switche, gelöscht wird, um unmittelbar die Vermittlung von Frames über das Redundanzsegment zu ermöglichen, wobei dies durch den Versand eines Informationsframes durch ein Netzwerkinfrastrukturgerät in einem segmentierten Teilbereich des Ringes auf seiner Schnittstelle in das weitere Netzwerk zusammen mit der Öffnung dieser Schnittstelle für den regulären Netzwerkverkehr geschieht.

4. Verfahren nach Anspruch 3, **dadurch gekennzeichnet, dass** ein als Redundanzmanager betriebenes Netzwerkinfrastrukturgerät über die Verbindung zwischen dem Netzwerk und dem weiteren Netzwerk ein Informationsframe eines Gerätes, das auf die Segmentierung eines Teils des Netzwerks hinweist, empfängt, wobei dann, wenn es auf seinen beiden Schnittstellen zum Netzwerk seine Testframes nicht mehr empfängt, der Inhalt der Speichereinheit, insbesondere seine FDB, gelöscht wird, womit die unmittelbare Kommunikation über die Verbindung in das weitere Netzwerk ermöglicht wird und gleichzeitig die Anweisung zur Löschung der Inhalte der Speichereinheiten, Insbesondere der FDBs, an alle Netzwerkgeräte auf seinem Netzwerksegment versendet wird.

5. Verfahren nach Anspruch 3, **dadurch gekennzeichnet, dass** für den Fall, dass ein Gerät feststellt, dass es auf beiden Schnittstellen zum Netzwerk keine Testframes mehr empfängt, es dann auf seinen Ringschnittstellen eine Bekanntmachung zur Öffnung der Redundanzschnittstelle aussendet, wobei es dann, wenn es innerhalb einer definierten Zeitspanne keine Bekanntmachung eines anderen Gerätes mit einer bessern Priorisierung empfängt, es seinen Netzwerkport zum weiteren Netzwerk öffnet und ein Informationsframe mit dem Inhalt in das weitere Netzwerk sendet, das eine Segmentierung vorliegt und wobei es dann, wenn es hingegen eine Benachrichtigung über die bevorstehende Öffnung der zusätzlichen Redundanzschnittstelle von einem anderen Teilnehmer mit einer besseren Priorisierung erhält, die zusätzliche Redundanzschnittstelle blockiert bleibt, da ein anderes Gerät Im gleichen Segment die Verbindung in das redundante Netz realisiert, und das Netzwerkgerät, das über das Auswahlverfahren als höchstpriorisiertes Gerät identifiziert wurde, seinen Port In das weitere Netzwerk öffnet und seinen Speicherinhalt löscht und gleichzeitig auf seinen Ringschnittstellen eine Nachricht zur Löschung Speicherinhalte, insbesondere der FDBs, in sein angeschlossenes Netzsegment des defekten Segmentes versendet.

6. Verfahren nach Anspruch 5, **dadurch gekennzeichnet, dass** das höchstpriorisierte Gerät In festen Abständen weiterhin seine Öffnungsnachricht auf seinen Ringenschlüssen versendet und am Eintreffen oder Ausbleiben dieser Nachricht andere Netzwerkgeräte in diesem Segment einen möglichen Ausfall dieses Gerätes erkennen und ein neues oder anderes Gerät wählen, das den zusätzlichen Redundanzport öffnet

7. Verfahren nach zumindest einem der Ansprüche 3 bis 6, **dadurch gekennzeichnet, dass** dann, wenn der RM an seinen beiden Ringenschlüssen wieder seine eigenen Testframes empfängt, er eine Löschnachricht an den Ringanschlüssen versendet und einen seiner Ringanschlüsse blockiert, wobei die Ringclients, die sich (da die Testframes durch den Redundanzmanager wieder empfangen werden) folglich wieder in einem Segment mit dem Ringmanager befinden, dies registrieren durch den Empfang der Testframes und ihren zusätzlichen Redundanzport wieder blockieren.

8. Verfahren nach Anspruch 7, **dadurch gekennzeichnet, dass** dann, wenn die Reparatur zuerst In bzw. zwischen Segmenten erfolgt, die beide keinen RM beinhalten, die Geräte, die ihren zusätzlichen Redundanzport geöffnet haben, das Gerät ermittelt wird, das die Verbindung offen hält, während das andere Gerät die Verbindung blockiert

9. Verfahren nach Anspruch 7 oder 8, **dadurch gekennzeichnet dass** ein Gerät, das eine Wiederherstellung der physikalischen Verbindung auf einem seiner Ringports feststellt und weiterhin keine Testframes vom Redundanzmanager empfangt, eine Benachrichtigung an das an seine Ringports angeschossene Ringsegment verschickt, dass das Wahlverfahren wiederholt werden muss.

10. Verfahren nach zumindest einem der Ansprüche 3 bis 9, **dadurch gekennzeichnet, dass** als Speichereinheit eine Filtering Database (FDB) eines Netzwerkinfrastrukturgerätes eingesetzt wird.

## Claims

1. Method for operating a network having a linear ring topology and redundancy properties, wherein a plurality of network infrastructure devices are operated within the network and at least one of the network infrastructure devices is operated as a redundancy manager or can be operated in an error situation, wherein the redundancy manager is designed particularly to separate the line ends connected to it from one another in the error-free situation and to connect the two line ends to one another in the error situation, wherein the redundancy manager also feeds test messages into the two line ends at prescribed intervals of time and, from the reception at the respective other line end within a prescribed interval of time, derives a command for separating or connecting line ends, **characterized in that** it is sensed whether a segment of the network is isolated from the rest of the network and, when this situation has been sensed, the ring network is closed again between a network infrastructure device in the isolated segment and a network infrastructure device, particularly the redundancy manager, in the rest of the network using at least one additional connection.

2. Method according to Claim 1, **characterized in that** the at least one additional connection is made via a further network with network infrastructure devices.

3. Method according to Claim 1 or 2, **characterized in that** the at least one connection between the further network and the network is blocked for normal network traffic in the error-free configuration and in error-free operation, and the only connection between the two networks is the gateway on the redundancy manager, wherein said gateway is kept open for normal network traffic and a single open gateway between the two networks does not yet result in circulating data frames, wherein, however, in the case of a redundancy changeover, the content of a memory unit in each network infrastructure device, particularly a filtering database (FDB) in all the switches involved, is erased in order to immediately allow the conveyance of frames via the redundancy segment, wherein this is done by virtue of the dispatch of an information frame through a network infrastructure device in a segmented subregion of the ring on the interface thereof into the further network together with the opening of this interface for regular network traffic.

4. Method according to Claim 3, **characterized in that** a network infrastructure device operated as a redundancy manager receives via the connection between the network and the further network an information frame from a device which indicates the segmenting of a portion of the network, wherein if it no longer receives its test frames on its two interfaces to the network, the content of the memory unit, particularly the FDB of said device, is erased, which means that direct communication via the connection to the further network is made possible and at the same time the instruction for erasing the contents of the memory units, particularly the FDBs, is sent to all network devices on its network segment.

5. Method according to Claim 3, **characterized in that** if a device establishes that it is no longer receiving test frames on both interfaces to the network then it uses its ring interfaces to transmit notification to open the redundancy interface, wherein if it does not receive notification from another device with better prioritization within a defined period of time, it opens its network port to the further network and sends an information frame to the further network with the content that segmentation is present and wherein if, by contrast, it receives notification about the imminent opening of the additional redundancy interface from another subscriber with better prioritization, the additional redundancy interface remains blocked, since another device in the same segment is implementing the connection to the redundant network, and the network device which has been identified as a maximum-priority device by means of the selection method opens its port to the further network and erases its memory content and at the same time uses its ring interfaces to send a message to erase memory contents, particularly in the FDBs, to its connected network segment of the faulty segment.

6. Method according to Claim 5, **characterized in that** the maximum-priority device continues to send its opening message on its ring connections at fixed intervals and, from the arrival or absence of this message, other network devices in this segment recognize possible failure of this device and select a new or different device, which opens the additional redundancy port.

7. Method according to at least one of Claims 3 to 8, **characterized in that** if the RM receives its own test frames again on its two ring connections, it sends an erasure message to the ring connections and blocks one of its ring connections, wherein the ring clients, which are therefore (since the test frames are received by the redundancy manager again) in a segment with the ring manager again, register this by receiving the test frames and block their additional redundancy port again.

8. Method according to Claim 7, **characterized in that** if the repair is first performed in or between segments which both contain no RM, the devices which have opened their additional redundancy port ascertain the device which keeps the connection open, while the other device blocks the connection.

9. Method according to Claim 7 or 8, **characterized in that** a device which detects restoration of the physical connection on one of its ring ports and continues to receive no test frames from the redundancy manager sends notification to the ring segment connected to its ring ports indicating that the selection method needs to be repeated.

10. Method according to at least one of Claims 3 to 9, **characterized in that** the memory unit used is a filtering data base (FDB) in a network infrastructure device.

## Revendications

1. Procédé de fonctionnement d'un réseau ayant une topologie annulaire en forme de ligne et des propriétés de redondance, plusieurs appareils d'infrastructure de réseau fonctionnant à l'intérieur du réseau et au moins l'un des appareils d'infrastructure de réseau fonctionnant comme un gestionnaire de redondance ou pouvant fonctionner dans une situation de défaut, le gestionnaire de redondance étant notamment configuré pour, en l'absence de défaut, déconnecter l'une de l'autre les extrémités de ligne qui lui sont raccordées et, en cas de défaut, connecter ensemble les deux extrémités de ligne, le gestionnaire de redondance injectant en outre des télégrammes de test dans les deux extrémités de ligne à des intervalles de temps prédéfinis et dérivant de la réception à l'autre extrémité de ligne respective à l'intérieur d'un intervalle de temps prédéfini une instruction pour une déconnexion ou pour une liaison des extrémités de ligne, **caractérisé en ce qu'**il est détecté si un segment du réseau est déconnecté du reste du réseau et si ce cas a été détecté, le réseau annulaire est refermé par le biais d'au moins une liaison supplémentaire entre un appareil d'infrastructure de réseau du segment déconnecté et un appareil d'infrastructure de réseau, notamment le gestionnaire de redondance, du reste du réseau.

2. Procédé selon la revendication 1, **caractérisé en ce que** l'au moins une liaison supplémentaire est établie par le biais d'un autre réseau ayant des appareils d'infrastructure de réseau.

3. Procédé selon la revendication 1 ou 2, **caractérisé en ce que** l'au moins une liaison entre l'autre réseau et le réseau est bloqué pour le trafic de réseau normal dans la configuration sans défaut ainsi que lors d'un fonctionnement sans défaut et l'unique liaison entre les deux réseaux est la transition au niveau du gestionnaire de redondance, cette transition étant maintenue ouverte pour le trafic normal du réseau et une unique transition ouverte entre les deux réseaux ne donnant pas encore lieu à des trames de données giratoires, le contenu d'une unité de mémoire de chaque appareil d'infrastructure de réseau, notamment une base de données de filtrage (FDB) de tous les commutateurs participants, étant cependant effacé en cas de basculement en mode redondance afin de permettre la communication directe des trames par le biais du gestionnaire de redondance, ceci étant réalisé en envoyant une trame d'information à travers un appareil d'infrastructure de réseau dans une zone partielle segmentée de l'anneau sur son interface dans l'autre réseau conjointement avec l'ouverture de cette interface pour le trafic de réseau normal.

4. Procédé selon la revendication 3, **caractérisé en ce qu'**un appareil d'infrastructure de réseau fonctionnant en tant que gestionnaire de redondance reçoit par le biais de la liaison entre le réseau et l'autre réseau une trame d'information d'un appareil qui l'informe sur la segmentation d'une partie du réseau, le contenu de l'unité de mémoire, notamment de sa FDB, étant effacé lorsqu'il ne reçoit plus ses trames de test sur ses deux interfaces avec le réseau, la communication directe par le biais de la liaison dans l'autre réseau étant ainsi rendue possible et l'instruction d'effacement des contenus des unités de mémoire, notamment des FDB, étant simultanément envoyée à tous les appareils de réseau sur son segment de réseau.

5. Procédé selon la revendication 3, **caractérisé en ce que** dans le cas où un appareil constate qu'il ne reçoit plus de trames de test sur les deux interfaces avec le réseau, il envoie alors sur ses interfaces d'anneau une notification pour l'ouverture de l'interface de redondance et, s'il ne reçoit pas de notification d'un autre appareil avec une priorité meilleure à l'intérieur d'un intervalle de temps défini, il ouvre alors son port de réseau vers l'autre réseau et envoie une trame d'information avec le contenu dans l'autre réseau indiquant qu'il existe une segmentation et, si par contre il reçoit une information relative à l'ouverture imminente de l'interface de redondance supplémentaire de la part d'un autre abonné avec une priorité meilleure, l'interface de redondance supplémentaire reste bloquée, car un autre appareil dans le même segment réalise la liaison dans le réseau redondant et l'appareil de réseau qui a été identifié par le biais de la procédure de sélection comme étant l'appareil à priorité supérieure ouvre son port dans l'autre réseau et efface le contenu de sa mémoire et envoie simultanément sur ses interfaces d'anneau un message pour effacer le contenu des mémoires, notamment des FDB, dans son segment de réseau connecté du segment défectueux.

6. Procédé selon la revendication 5, **caractérisé en ce que** l'appareil à priorité supérieure envoie en outre son message d'ouverture sur ses connexions d'anneau à intervalles fixes et les autres appareils de réseau dans ce segment détectent une panne possible de cet appareil à l'arrivée ou à l'absence de ce message et sélectionnent un nouveau ou un autre appareil qui ouvre le port de redondance supplémentaire.

7. Procédé selon au moins l'une des revendications 3 à 6, **caractérisé en ce que** lorsque le gestionnaire de redondance reçoit de nouveau sur ses deux connexions d'anneau ses propres trames de test, il envoie un message d'effacement sur les connexions d'anneau et bloque l'une de ses connexions d'anneau, les clients d'anneau qui se retrouvent ensuite de nouveau (car les trames de test sont de nouveau reçues par le gestionnaire de redondance) dans un segment avec le gestionnaire d'anneau, enregistrent cela par la réception des trames de test et bloquent de nouveau leur port de redondance supplémentaire.

8. Procédé selon la revendication 7, **caractérisé en ce que** lorsque la réparation a tout d'abord lieu dans ou entre les segments qui ne contiennent tous deux aucun gestionnaire de redondance, parmi les appareils qui ont ouvert leur port de redondance supplémentaire, on détermine l'appareil qui maintient la liaison ouverte pendant que l'autre appareil bloque la liaison.

9. Procédé selon la revendication 7 ou 8, **caractérisé en ce qu'**un appareil qui constate le rétablissement de la liaison physique sur son port d'anneau et ne reçoit en outre aucune trame de test de la part du gestionnaire de redondance envoie au segment d'anneau qui est connecté à son port d'anneau une notification selon laquelle il doit répéter la procédure de sélection.

10. Procédé selon au moins l'une des revendications 3 à 9, **caractérisé en ce que** l'unité de mémoire utilisée est une base de données de filtrage (FDB) d'un appareil d'infrastructure de réseau.
